# FASCICULE DE BREVET EUROPEEN

(11) **EP 1 546 067 B1**
(45) Date de publication et mention de la délivrance du brevet: **11.04.2007**
(21) Numéro de dépôt: 03776951.0
(22) Date de dépôt: 02.10.2003
(51) Int. Cl.: C06D 3/00, A01N 25/20

(54) **COMPOSITION FUMIGENE**
RAUCH ERZEUGENDE ZUSAMMENSETZUNG
SMOKE COMPOSITION

(30) Priorité: 02.10.2002 FR 0212185
(43) Date de publication de la demande: 29.06.2005
(73) Titulaire: L.C.B., 71260 La Salle (FR)
(72) Inventeur: ROCQUET, Philippe, F-71000 Macon (FR)
(74) Mandataire: Guerre, Dominique
(86) Numéro de dépôt international: PCT/FR2003/002893
(87) Numéro de publication internationale: WO 2004/031104

(56) Documents cités:
- EP-A- 0 639 331
- CH-A- 270 473
- FR-A- 952 628
- FR-A- 2 531 071
- GB-A- 801 659
- GB-A- 807 725
- US-A- 2 606 858
- US-A- 2 695 258
- US-A- 3 052 577
- US-A- 3 929 530
- US-H- H 227
- DATABASE WPI Section Ch, Week 199214 Derwent Publications Ltd., London, GB; Class C03, AN 1992-110797 XP002244881 & JP 04 054102 A (MINAKATA JOCHUFUN S), 21 février 1992 (1992-02-21)

## Description

L'invention concerne une composition fumigène comprenant une base fumigène et une ou des substances actives, généralement biocides et/ou phytopharmaceutiques.

Par substance active biocide et/ou phytopharmaceutique, on entend dans la présente description, une substance chimiquement définie et non formulée, utilisée afin de lutter contre la présence d'organismes ou de micro-organismes considérés comme nuisibles.

Dans la suite de ce brevet, on appellera matière active d'un fumigène, la substance active ou l'ensemble des substances actives utilisées dans ce fumigène. De même, par concentration en matière active, il s'agira de la somme de chacune des concentrations des substances actives, présentes dans le fumigène, hors formulation.

La fumigation est une technique qui, par la combinaison d'une élévation importante et brutale de la température, et d'une génération conséquente de gaz, permet de disperser très efficacement et de manière homogène, dans l'air, une ou des matières actives, sous forme d'aérosol solide et/ou liquide, très fin, généralement au moins microscopique ou alors de gaz.

L'expérience montre que l'aérosol et/ou le gaz peuvent s'introduire dans le moindre recoin, ce qui, combiné avec sa grande finesse, permet un traitement particulièrement efficace.

Une composition ou préparation fumigène est constituée par une base auto-réactive, chauffant rapidement et fortement, sa température pouvant atteindre plusieurs centaines de degrés entre quelques secondes et quelques minutes, tout en libérant une quantité importante de gaz, et par une ou des substances actives, sous forme de poudre, de liquide ou de pâte, éventuellement imprégnée sur un support, qui sous l'action conjuguée de l'élévation brutale de température et de l'émission de gaz, vont être dispersées finement, sous forme d'aérosol liquide et/ou solide.

Les domaines d'application des fumigènes sont en général ceux de la désinfection et de la désinsectisation dans les industries agroalimentaires, l'élevage, le stockage et le transport de semences ou de récoltes, les serres ou abris, les hôpitaux, les collectivités, les locaux domestiques, etc.... Bien entendu, la portée de la présente invention n'est pas limitée à ces applications, même si sa description ci-après est faite en référence à une utilisation biocide et ou phyto/pharmaceutique.

On peut par exemple, envisager la diffusion d'une matière active à action pharmaceutique, par inhalation, en médecine humaine ou vétérinaire.

Avant de continuer, il faut définir quelques notions liées à l'utilisation du fumigène, en se fixant plus particulièrement sur les fumigènes désinfectants ou insecticides.

Un traitement fumigène ou fumigation consiste à déclancher la combustion d'une préparation fumigène contenant une matière active, dont la quantité est en rapport avec le volume de la salle à traiter, celle-ci étant préalablement calfeutrée.

Un temps de contact suffisant, généralement de plusieurs heures, est maintenu entre les émissions du fumigène et la pièce fermée.

On désignera par temps de fumigation le temps durant lequel le fumigène fume effectivement, et par temps de contact, la période totale durant laquelle la salle à traiter est effectivement en contact avec les émissions.

Le terme fumigation définit l'ensemble du traitement.

De manière générale, l'efficacité d'un fumigène désinfectant / insecticide est déterminée, à l'issue de ce temps de contact préalablement déterminé, soit par la proportion d'organismes cibles ayant été détruits sur une surface, par rapport à un témoin non traité, soit par l'abaissement quantitatif du taux de nuisances engendrées par ces organismes chez l'utilisateur du fumigène.

On parlera de fumigène efficace ou de bonne efficacité d'un fumigène soit si celui-ci atteint une proportion d'organismes cibles détruits, compatible avec des exigences quantitatives préalablement fixées par des normes, des lois, des procédures administratives, des règles internes à une société ou à une administration, ou par la simple expérience sur le terrain, ou si le niveau de nuisances causées par les organismes cibles après la fumigation, est considéré comme étant acceptable par l'utilisateur.

La dose efficace d'une matière active est la quantité de matière active théoriquement dispersée dans l'atmosphère du local à traiter, nécessaire pour un traitement efficace. Cette dose s'exprime généralement en mg/m³. Elle correspond en fait à la quantité de matière active initialement présente dans le fumigène, divisée par le volume à traiter. A l'heure actuelle, les doses efficaces de matière active pour un fumigène désinfectant sont de l'ordre de 30 à 160 mg/m³, et pour un fumigène insecticide de l'ordre de 6 à 50 mg/m³.

La dose efficace d'une composition fumigène est exprimée par le nombre de grammes de composition fumigène par mètre cube (g/m³), assurant un traitement efficace au sens précédemment défini. A titre d'illustration, les valeurs des doses efficaces pour les compositions fumigènes insecticides sont de l'ordre de 0,2 à 2 g/m³, et pour les compositions fumigènes désinfectantes, de l'ordre de 0,3 à 1,5 g/m³.

Mais bien évidemment, la dose efficace d'un fumigène dépend de la concentration et de l'efficacité de la matière active, du temps de contact, et de l'application.

On entend par résidus au sol, l'ensemble des produits se retrouvant au sol après la fumigation, c'est-à-dire produits de dégradation du fumigène, mais aussi matière active et constituants du fumigène.

On entend par émissions, l'ensemble des composés émis dans l'air par la base fumigène, c'est-à-dire l'ensemble des aérosols et des gaz.

Contrairement aux produits dénommés « fumigants » dégageant des gaz fortement toxiques et réservés à des équipes spécialisées, voir soumises à autorisation, les fumigènes peuvent être manipulés par des non techniciens et en particulier le grand public, même si généralement le traitement proprement dit se fait en dehors de toute présence humaine.

En conséquence, il faudrait disposer de compositions fumigènes qui outre une bonne efficacité, possèdent les propriétés suivantes.
- mise en oeuvre facile, en particulier pour l'allumage, qui doit se faire aisément, mais sans flamme, ni explosion
- peu d'odeur, rémanente ou non
- peu de résidus au sol
- résidus et émissions peu toxiques vis-à-vis de l'environnement et de l'homme, et bien identifiables
- absence de projection de produits chauds hors du contenant
- fabrication, transport, stockage et manipulation en toute sécurité, tant au niveau des dangers d'inflammation voire d'explosion, que de la toxicité du produit fumigène en lui-même.

Actuellement, un compromis est généralement atteint avec des bases fumigènes comprenant un système oxydo-réducteur qui engendre l'action de chauffage brutal et le dégagement gazeux, l'agent oxydant étant généralement à base de nitrates, chlorates ou perchlorates, et l'agent réducteur, à base de composés azotés ou carbonés, et des excipients intervenant sur la qualité de l'allumage, sur la combustion afin qu'elle soit régulière et sans flammes, ou facilitant la manipulation.

Mais ces compositions présentent divers inconvénients. Elles sont encore trop fortement odorantes durant et après la fumigation, elles génèrent des quantité importantes de résidus au sol, à majorité organiques. Les résidus sont parfois toxiques, salissants et d'une composition généralement mal définie. En outre, ils ont souvent pour effet de diminuer l'efficacité de la matière active. La quantité de résidus secs au sol de ces compositions fumigènes se situent généralement entre 5 et 15 % de la masse initiale de celle-ci.

De telles compositions sont par exemple décrites dans les documents suivants.

Le document JP-03-086804 décrit une composition fumigène insecticide ou fongicide, dont la base fumigène comprend du chlorate de potassium, un agent réducteur tel que le glucose ou l'amidon, un dérivé de la thiourée (1-30%) et éventuellement une charge minérale choisie parmi l'argile et le talc, de la mélamine à titre d'agent régulateur de la combustion et de la carboxyméthylcellulose.

Le document FR-A-2 096 873 divulgue une composition fumigène, comprenant du nitrate d'ammonium en une proportion de l'ordre de 42% en poids du poids total de la composition, du dicyandiamide en une proportion de l'ordre de 28% à titre d'agent réducteur, 0,5% à 20% d'une charge minérale ayant la fonction d'écran thermique et de 5% à 10% d'une matière active fongicide ou bactéricide.

Selon le document FR-A-2 637 459, on connaît une composition fumigène insecticide, bactéricide ou fongicide, dont la base fumigène comprend du nitrate d'ammonium (au moins 42% en poids du poids final de la base), du dicyandiamide (au moins 28% en poids) à titre d'agent réducteur, de la silice (environ 10%) et un composé chloré sous forme liquide ou solide.

L'importante quantité des résidus générée par ces compositions de l'art antérieur, en constitue un inconvénient majeur.

Ces résidus sont essentiellement le résultat de la dégradation lors de la fumigation de l'agent réducteur et de la matière active, qui, dans ces compositions, représentent souvent, en poids, autour du tiers, voire plus, de la composition finale. Cette dégradation, outre la production de résidus qui peuvent amener une certaine toxicité pour l'homme ou l'environnement, oblige à augmenter la quantité de matière active initialement présente, afin d'atteindre le niveau d'efficacité requis.

Pour résoudre ce problème, la demanderesse a recherché une base fumigène qui tout en possédant les propriétés précitées, à savoir, efficacité, manipulation facile, et risques limités de projection, d'inflammation et d'explosion, permettrait de diminuer la proportion de l'agent réducteur et de la matière active en augmentant l'efficacité de celle-ci.

La demanderesse a ainsi découvert une base fumigène très performante dont les propriétés seront illustrées plus loin dans la description, dans laquelle la proportion de l'agent réducteur est fortement réduite par rapport à celle des compositions ci-dessus, et qui permet d'obtenir une composition efficace avec une quantité de matière active très inférieure à celles des compositions connues.

L'un des intérêts de l'invention est donc d'abaisser la quantité initiale de matière active utilisée pour traiter un m³ d'air. Ceci signifie que pour une même dose efficace de fumigène, la proportion de matière active dans le fumigène, est assez fortement diminuée.

Bien entendu, il ne s'agit pas d'augmenter la dose efficace de fumigène, par exemple de 1 g/m³ à 2 g/m³, pour abaisser dans la même proportion la concentration de matière active dans ledit fumigène, par exemple de 10% à 5 %.

De manière inattendue, une réaction de fumigation correcte avec une faible proportion d'agent réducteur, est obtenue en ajoutant en forte proportion une charge minérale, qui normalement, est chimiquement peu réactive.

De manière tout aussi inattendue, la demanderesse a en outre découvert que l'utilisation de cette base permettait d'abaisser significativement la proportion de matière active dans l'air et donc dans la composition, sans que l'efficacité de la composition obtenue ne soit affectée.

La demanderesse utilisant pour des raisons pratiques des doses efficaces de fumigène bactéricide, fongicide et insecticide de 0,1 g/m³ à 3 g/m³, les concentrations de matière active dans le fumigène qui fait l'objet de la présente invention sont de l'ordre de 0,05% à 5%, afin d'obtenir une dose théorique de matière active dans l'air de l'ordre de 0,5 mg/m³ à 40 mg/m³.

Comme dit précédemment, les valeurs des doses efficaces pour une matière active insecticide dans les fumigènes actuels sont de l'ordre de 6 à 50 mg/m³, et pour un fumigène désinfectant de l'ordre de 30 à 160 mg/m³.

Pour des fumigènes utilisés à des doses différentes, il faudrait bien évidemment corriger en proportion la concentration de matière active dans le fumigène.

De même, les doses précédentes ne s'appliquent que pour des applications fongicides, bactéricides et insecticides.

Pour d'autres applications, il est bien évident que celles-ci peuvent être différentes.

Ainsi, un premier objet de l'invention est une composition fumigène telle que définie en revendication 1, comprenant 0,05 à 5% d'une ou plusieurs matières actives, pour une dose efficace de matière(s) active(s) de 0,5 mg/m³ à 40 mg/m³, et une base fumigène, ladite base fumigène comprend au moins un agent oxydant, un agent réducteur et une charge minérale, la charge minérale représentant au moins 25%, avantageusement entre 25 et 65%, en poids de ladite base, l'agent réducteur au plus 16%, avantageusement entre 2 et 13%, en poids de ladite base, et le rapport en poids dudit agent oxydant audit agent réducteur étant d'au moins 3/1.

Par rapport aux compositions connues, les proportions d'agent réducteur et de matière active sont fortement réduites, et le rapport de l'agent oxydant à l'agent réducteur est élevé, ce qui conduit à des compositions dont la fumigation engendre beaucoup moins de résidus.

Selon l'invention, la charge minérale est au moins partiellement fonctionnelle et comprend au moins un agent aérateur, un agent catalyseur et/ou un agent régulateur.

Dans la suite, on parlera de composé pour un produit unique, et d'agent pour un composé ou un mélange de composés remplissant au moins une fonction particulière dans la fumigation.

Avant d'exposer plus en détail les caractéristiques et avantages de l'invention, certains termes employés dans la description et les revendications sont définis.

Un agent aérateur est un composé ou mélange de composés facilitant l'évacuation des gaz au cours de la fumigation.

Il empêche donc, lors de la poussée des gaz qui se produit durant la combustion, la formation d'une surpression qui peut amener l'éjection hors du contenant, de matières chaudes.

De ce fait, il a aussi pour effet de faciliter la sortie de la matière active.

Un agent aérateur, selon l'invention, est sous forme de poudre, de faible granulométrie, de faible densité apparente par rapport à la densité réelle et dont la forme des particules favorise le passage des gaz.

A titre de contre-exemple, l'argile, en raison de la structure lamellaire de ses particules, n'est pas un bon agent aérateur.

Un agent régulateur de la combustion, est un composé ou mélange de composés ayant pour but de faire en sorte que la fumigation soit la plus régulière possible, et d'éviter que celle-ci ne devienne trop violente ou trop faible. Cette régulation peut se faire en dégageant des vapeurs qui évacuent une partie de l'énergie de l'oxydo-réduction.

En parallèle ces vapeurs peuvent aussi avoir pour objectif de faciliter la sortie de la matière active, par entraînement et de protéger cette même matière active de composés réactifs susceptibles de les dégrader, tels des gaz oxydants (oxydes d'azote et N₂O).

Un agent catalyseur de la combustion est un composé ou mélange de composés facilitant le déclenchement et l'entretien de la réaction. L'agent catalyseur permet que la fumigation soit amorcée avec un système d'allumage raisonnablement puissant, en particulier en terme de risques au cours de la manipulation, et que la réaction s'auto-entretienne.

Une composition fumigène selon l'invention émet ou libère un aérosol ou un gaz, généralement destiné à la destruction ou au contrôle de microorganismes, d'insectes, ou d'autres envahisseurs indésirables. Elle est constituée d'un ensemble de composés comprenant au moins la base fumigène et la matière active, celle-ci étant avantageusement choisie parmi les agents bactéricides, fongicides, virucides, levuricides, insecticides, acaricides, et devant posséder en plus une bonne résistance à la chaleur, à l'oxydation et se vaporiser facilement.

La matière active est introduite sous forme solide, liquide ou pâteuse, dans la composition fumigène.

A titre d'illustration, on peut considérer le protocole d'essai insecticide C.E.B. n°135 bis et la norme de désinfection par voie aérienne NFT 72-281.

Avec une base de l'invention, on constate de manière inattendue, une efficacité suivant le protocole d'essai insecticide C.E.B. n°135 bis, pour une matière active, à la dose de 1,5 mg/m³, alors qu'avec une base classique et cette même matière active, la dose efficace est de 9 mg/m³.

En utilisant une autre base de l'invention, on constate de manière aussi inattendue, qu'une composition fumigène désinfectante peut-être efficace au sens de la norme NFT-72-281 en fongicidie et en bactéricidie, avec une matière active à la dose de 2 mg/m³ contre 100 mg/m³ précédemment, avec la même matière active.

Une base fumigène de l'invention permet donc en comparaison avec les bases fumigènes connues et à efficacité comparable, de diminuer à la fois la proportion de l'agent réducteur et celle de la matière active, qui sont les deux sources principales de résidus, après fumigation.

D'autres caractéristiques préférentielles de l'invention, considérées seules ou en combinaison, et permettant d'obtenir les avantages précités, sont ci-après exposés.

Ainsi, ladite base comprend, par rapport au poids final de la base, de 2% à 14%, de préférence 8 à 12% en poids dudit agent aérateur et de 0,5 à 10%, de préférence 3 à 5% en poids dudit agent catalyseur, et de 12 à 60% en poids, de préférence de 23 à 42% dudit agent régulateur.

Certains composés peuvent remplir plusieurs fonctions, ainsi ils peuvent être à la fois catalyseurs et régulateurs ou aérateurs et régulateurs. Dans ce cas, la proportion dans la base d'un tel composé peut atteindre la proportion en catalyseur ou aérateur, plus si nécessaire, la proportion en régulateur.

L'argile et le chlorure de magnésium hexahydraté, les phosphates et polyphosphates sont des composés catalyseurs et régulateurs préférentiels.

Les hydroxydes, carbonates et bicarbonates minéraux sont des composés aérateurs et régulateurs.

Parmi ceux-ci, les hydroxydes d'aluminium, de magnésium et de fer, le carbonate de calcium, de magnésium, de sodium et de potassium cristallisant avec de l'eau ou non, sont des composés aérateurs et régulateurs préférentiels.

Les composés aérateurs simples sont avantageusement choisis parmi la silice, comme la silice précipitée ou la silice vaporisée, le kieselguhr, le talc, les silicates, les oxydes de fer, d'aluminium, de magnésium et de calcium, les sulfates d'aluminium, magnésium, calcium, potassium, sodium et baryum, et les mélanges de ces composés.

Les composés catalyseurs simples sont avantageusement choisis parmi les sels minéraux halogénés, y compris à base d'ammonium, et/ou des sels minéraux ou organiques de cuivre et/ou de l'oxyde de titane TiO₂ et leurs mélanges.

Parmi ceux-ci, les composés catalyseur préférentiels sont choisis parmi les chlorure et iodure de sodium, de potassium, de calcium, de magnésium, d'ammonium et de cuivre, l'oxyde cuivrique CuO, l'oxyde de titane TiO₂.

Les composés régulateurs simples sont avantageusement choisis parmi les carbonates, bicarbonates et carbamates d'ammonium, les sels minéraux cristallisants avec des molécules d'eau, autres que les précédents définis pour les composés aérateurs et régulateurs.

L'agent réducteur comprend un ou des composés organiques auquel peut être ajouté un ou des composés minéraux.

Le composé organique est avantageusement choisi parmi les dérivés du carbone, notamment les composés fortement carbonés de formule simple, comme le charbon, le noir de carbone, le graphite ou la paraffine, les glucides, tels que l'amidon et les celluloses et dérivés, les polyols comme le pentaérythritol, le sorbitol, les glycols tels que le glycérol, le propylène glycol, et les acides organiques et les sels desdits acides, lesdits acides ou sels comportant au plus 9 atomes de carbone, de préférence au plus 7 atomes de carbone.

Par glucide on entend les mono et polyhydroxyaldéhydes, les mono et polyhydroxycétones, en particulier les mono et polysaccharides, leurs dérivés comme les mono et polyhydroxyacides et les mono et polyhydroxyamines.

A titre d'exemple, des glucides avantageux sont les différents sucres, l'amidon et ses dérivés, la cellulose et ses dérivés.

L'amidon constitue un agent un agent réducteur avantageux selon l'invention.

Un autre agent réducteur avantageux suivant l'invention est choisi parmi les hydroxyacides organiques, salifiés ou non, comme l'acide tartrique.

L'agent réducteur peut aussi comprendre au moins un autre composé organique, notamment choisi parmi l'urée, la dicyandiamide, la mélamine, la cyanamide et leurs sels, l'azodicarbonamide, la guanidine et ses sels, la biguanide et ses sels, les carbazate de méthyle et d'éthyle.

La proportion de ces composés azotés ne peut alors dépasser 12 % en poids par rapport à la base.

L'agent réducteur peut en outre comprend au moins un composé minéral réducteur. Les composés minéraux sont avantageusement choisis parmi le soufre et les oxydes de soufre, anhydres ou non ; préférentiellement le thiosulfate de sodium Na₂S₂O₃, anhydre ou non. Celui-ci est avantageusement présent en une proportion variant de 1 à 6% en poids par rapport au poids de la base.

L'agent oxydant de ladite base est avantageusement choisi parmi les nitrates, les nitrites, les chlorates et perchlorates, les iodates et periodates, les peroxydes, seuls ou en mélange. Sa proportion préférentielle dans ladite base varie de 30 à 70% en poids, et de préférence de 40 à 60%. Ainsi, dans une variante préférée, l'agent oxydant contient du nitrate d'ammonium, présent en une proportion variant de 40 à 60 % en poids par rapport au poids de la base.

L'agent oxydant peut comprendre de 30 à 70% en poids de ladite base, de préférence 40 à 60%, au moins deux nitrates différents. Par exemple, il comprend de 4 à 16% en poids de ladite base, de nitrate de potassium, nitrate de sodium et/ou nitrate de calcium.

Il peut en outre comprendre de 1 à 9% en poids de ladite base, de nitrate de cuivre, nitrate d'aluminium ou nitrate de magnésium. Il peut aussi comprendre au moins un peroxyde choisi parmi les sels minéraux peroxyhydratés.

Une composition préférée selon l'invention comprend une base incorporant :
- de 3 à 15 % en poids d'amidon, et/ou
- de 6 à 12% en poids de silice, et/ou
- de 2 à 7 % en poids d'un chlorate ou d'un perchlorate ou d'un iodate ou d'un periodate.

Mieux encore, ladite base comprend de 35 à 45% en poids de nitrate d'ammonium, de 5 à 12% en poids de nitrate de sodium ou de potassium, de 6 à 12% en poids d'amidon, de 4 à 9% en poids d'un acide hydroxycarboxylique ou de son sel comportant au plus 6 atomes de carbone, de 7 à 10% en poids de silice et le complément en argile.

Une telle base peut en outre comprendre un ou des sels halogénés, dans une proportion variant de 1 à 7% en poids de la base.

Un autre objet de l'invention est une composition fumigène comprenant au moins une base fumigène telle que définie ci-dessus et une matière active.

On mesure l'efficacité désinfectante d'une composition fumigène selon une technique décrite ci-après qui fait l'objet de la norme AFNOR, NFT 72-281.

Cette technique consiste à disposer, dans une salle où se produira la fumigation, des porte-germes de tests, c'est-à-dire des plaques d'un matériau bien défini, recouvertes de solution séchée, ou inoculum, contenant un nombre connu de microorganismes identiques et de même souche.

Des portes germes témoins identiques, mais non soumis aux émissions, sont eux aussi placés dans la salle.

Après un temps de contact préalablement déterminé, avec les émissions du fumigène, on détermine par des procédés microbiologiques classiques, le nombre de microorganismes qui ont survécu dans les portes germes d'essai et témoin.

L'efficacité est alors donnée par le rapport entre le nombre de microorganismes du porte-germe témoin sur celui du porte-germe d'essai.

Si l'on mesure l'efficacité bactéricide d'une composition, un produit est dit bactéricide suivant cette norme, si le nombre des bactéries viables a été divisé par un rapport de 10⁵ à celui des bactéries viables présentes dans l'échantillon témoin.

Si l'on mesure l'efficacité fongicide d'une composition, un produit est dit fongicide suivant cette norme si le nombre de moisissures viables a été divisé par un rapport de 10⁴ par rapport à celui des moisissures viables de l'échantillon témoin.

### Exemple 1 : composition fumigène désinfectante selon l'invention

| | |
|---|---|
| NH₄NO₃ | 40% |
| KNO₃ | 4% |
| Na₂S₂O₃ | 1% |
| 4'-hydroxysalicylanilide | 0,5% |
| Amidon | 7% |
| Urée | 2% |
| TiO₂ | 1% |
| Argile | qsp 100% (soit 44,5%) |

A la dose de 1g/m³, pour une période de contact de 15 heures, cette composition fumigène possède, suivant la norme NFT 72281, une efficacité de 1,8 logs sur *Aspergillus niger.*

### Exemple 2 : composition fumigène classique

| | |
|---|---|
| NH₄NO₃ | 48% |
| Dicyandiamide | 32% |
| Silice précipitée | 10% |
| 4'-hydroxysalicylanilide | 10% |
| | 100% |

### Exemple 3 : comparaison entre la composition fumigène selon l'invention décrite à l'exemple 1 et la composition fumigène classique décrite à l'exemple 2

La composition fumigène classique possède une efficacité désinfectante équivalente à celle de la composition de l'exemple 1 mais avec une dose de matière active par m³ nettement supérieure. En outre, l'odeur est beaucoup plus forte, et la quantité de résidus au sol nettement supérieure.

A titre d'exemple, le résidu au sol de la formulation de l'exemple 1 est compris entre 0,5% et 2% de la masse initiale de la composition, alors que celui de la formulation de l'exemple 2 est compris entre 10 et 15%.

Que l'on mesure l'efficacité bactéricide ou l'efficacité fongicide de la composition, la composition de l'exemple 2 possède une efficacité de 1 g/m³ de poudre initiale, pour un temps de contact de 15 heures.

### Exemple 4

### Efficacité insecticide d'un fumigène à la bifenthrine

### Formule

| Premix | |
|---|---|
| Al(OH)₃ | 10,0% |
| bifenthrine | 1,5% |

La bifenthrine est préalablement fondue, pour être absorbée sur l'hydroxyde d'aluminium. Ce pré-mélange est alors rajouté à la base suivante de l'invention:

| | |
|---|---|
| NH₄NO₃ | 50,0% |
| Silice précipitée | 10,0% |
| Argile | 19,5% |
| Amidon | 9,0% |
| | 100,0% |

Ce fumigène est testé à la dose de 0,1 g/m³, donc à 1,5 mg/m³ de bifenthrine, selon le protocole C.E.B. n° 135 bis.

Les espèces testées sont :
*Blattella germanica*
*Plodia interpunctella*
*Tribolium confusum*
*Rhizopertha dominica*
*Musca domestica*
*Ctenocephalides felis.*

Résultat : au bout de 4 heures d'exposition, aucun des insectes n'a survécu.

Une dose d'emploi classique pour un fumigène est de 9 mg/m³ de bifenthrine, c'est-à-dire nettement plus que la dose mise en oeuvre de 1,5 mg/m³ dans les fumigènes de la présente invention.

En outre, le résidu sec au sol peut-être estimé à environ 1% de la masse initiale du fumigène, et est essentiellement constitué, outre la bifenthrine, par du nitrate d'ammonium très peu toxique.

Pour cette composition fumigène, si on considère un local de 1000 m³, de 4 mètres de hauteur, le résidu sec au sol sera de l'ordre de 4 mg/m², si on ne tient pas compte de la surface des murs et plafonds.

Il s'agira donc d'une quantité extrêmement faible.

## Revendications

1. Composition fumigène comprenant 0,05 à 5% d'une ou plusieurs matières actives et une base fumigène qui comprend au moins :
un agent oxydant comprenant du nitrate d'ammonium,
au plus 16% en poids d'un agent réducteur, le rapport en poids dudit agent oxydant audit agent réducteur étant d'au moins 3/1,
au moins 25% en poids d'une charge minérale,
ladite composition étant **caractérisée en ce que** la charge minérale comprend au moins :
12 à 60% en poids d'un agent régulateur comprenant de l'argile et au moins un composé régulateur choisi parmi les hydroxydes, les carbonates, bicarbonates minéraux et les carbarnates d'ammonium, les phosphates, les polyphosphates et le chlorure de magnésium hexahydraté,
2 à 14% en poids d'un agent aérateur comprenant au moins un composé aérateur choisi parmi la silice, le kieselguhr, le talc, les silicates, les oxydes de fer, d'aluminium, de magnésium et de calcium, les sulfates d'aluminium, de magnésium, de calcium, de potassium, de sodium et de baryum et les mélanges de ces composés, les hydroxydes, les carbonates et les bicarbonates minéraux, et
0,5 à 10% en poids d'un agent catalyseur comprenant au moins un composé catalyseur choisi parmi l'argile, le chlorure de magnésium hexahydraté, les phosphates et les polyphosphates hydratés ou non, les sels minéraux halogénés, y compris à base d'ammonium, les sels minéraux ou organiques de cuivre, et l'oxyde de titane TiO₂ et leurs mélanges.

2. Composition selon la revendication 1, **caractérisée en ce que** l'agent réducteur comprend au moins un premier composé organique choisi parmi les glucides et dérivés, les polyols, les acides organiques et les sels desdits acides, lesdits acides ou sels comportant au plus 9 atomes de carbone, et les dérivés du carbone, comme le charbon, le noir de carbone ou le graphite.

3. Composition fumigène selon la revendication 2, **caractérisée en ce que** ledit premier composé organique au moins est l'amidon, les celluloses et dérivés, le sorbitol, le glycérol ou le pentaérythritol.

4. Composition fumigène selon la revendication 2, **caractérisée en ce que** ledit premier composé organique au moins est choisi parmi les acides organiques hydroxycarboxyliques et leurs sels, lesdits acides ou sels comportant jusqu'à 7 atomes de carbone.

5. Composition fumigène selon l'une quelconque des revendications 2 à 4, **caractérisé en ce que** l'agent réducteur comprend un second composé organique choisi parmi l'urée, la dicyandiamide, la mélamine, la cyanamide et leurs sels, l'azodicarbonamide, la guanidine et ses sels, la biguanide et ses sels, les carbazates de méthyle et d'éthyle, ledit second composé organique réducteur étant présent en une proportion maximale de 12% en poids par rapport au poids de la base.

6. Composition fumigène selon l'une quelconque des revendications 1 à 5, **caractérisée en ce que** ladite base comprend, par rapport au poids final de la base, de 23 à 42% dudit agent régulateur.

7. Composition fumigène selon l'une quelconque des revendications 1 à 6, **caractérisée en ce que** ladite base comprend, par rapport au poids final de la base, de 8 à 12% en poids dudit agent aérateur.

8. Composition fumigène selon l'une quelconque des revendications 1 à 7, **caractérisée en ce que** ladite base comprend, par rapport au poids final de la base, de 3 à 5% en poids dudit agent catalyseur.

9. Composition fumigène selon l'une quelconque des revendications 1 à 8, **caractérisée en ce que** l'agent aérateur comprend de la silice précipitée ou vaporisée.

10. Composition fumigène selon l'une quelconque des revendications 1 à 9, **caractérisée en ce qu'**au moins un composé catalyseur de l'agent catalyseur est choisi parmi les chlorures et iodures de sodium, de potassium, de calcium, de magnésium, d'ammonium et de cuivre, l'oxyde cuivrique CuO, et l'oxyde de titane TiO₂.

11. Composition fumigène selon l'une quelconque des revendications 1 à 10, **caractérisée en ce que** l'agent régulateur est choisi parmi les hydroxydes de magnésium et d'aluminium et les carbonates de sodium, de potassium, de calcium et de magnésium, cristallisant avec de l'eau ou non.

12. Composition fumigène selon l'une quelconque des revendications 1 à 11, **caractérisée en ce que** l'agent réducteur comprend au moins un composé minéral réducteur.

13. Composition fumigène selon la revendication 12, **caractérisée en ce que** le composé minéral réducteur est choisi parmi le soufre et les oxydes de soufre, anhydres ou non.

14. Composition fumigène selon la revendication 13, **caractérisée en ce que** le composé minéral réducteur est le thiosulfate de sodium Na₂S₂O₃, anhydre ou non.

15. Composition fumigène selon la revendication 14, **caractérisée en ce que** le thiosulfate de sodium est présent en une proportion variant de 1 à 6 % en poids par rapport au poids de la base.

16. Composition fumigène selon l'une quelconque des revendications 1 à 15, **caractérisée en ce que** l'agent oxydant est présent dans ladite base en une proportion variant de 30 à 70% en poids.

17. Composition fumigène selon la revendication 16, **caractérisée en ce que** l'agent oxydant est présent en une proportion variant de 40 à 60 % en poids par rapport au poids de la base.

18. Composition fumigène selon la revendication 16 ou 17, **caractérisée en ce que** l'agent oxydant ne consiste qu'en du nitrate d'ammonium.

19. Composition fumigène selon la revendication 16 ou 17, **caractérisée en ce que** l'agent oxydant comprend en outre de 1 à 9% en poids de ladite base, de nitrate de cuivre, nitrate d'aluminium ou nitrate de magnésium.

20. Composition fumigène selon l'une quelconque des revendications 1 à 17 ou 19, **caractérisée en ce que** l'agent oxydant comprend au moins un peroxyde choisi parmi les sels minéraux peroxyhydratés.

21. Composition fumigène selon l'une quelconque des revendications 1 à 20, **caractérisée en ce que** ladite base comprend de 3 à 15 % en poids d'amidon.

22. Composition fumigène selon l'une quelconque des revendications 1 à 21, **caractérisée en ce que** ladite base comprend de 6 à 12% en poids de silice.

23. Composition fumigène selon l'une quelconque des revendications 1 à 20, **caractérisée en ce que** ladite base comprend de 2 à 7 % en poids d'un chlorate ou d'un perchlorate ou d'un iodate ou d'un periodate.

24. Composition fumigène selon l'une quelconque des revendications 1 à 23, **caractérisée en ce que** la ou les matières actives sont choisies parmi les matières actives désinfectantes ou insecticides.

## Claims

1. A smoke composition comprising 0.05 to 5% of one or more active ingredients and a smoke base, said smoke base comprising at least:
one oxidizing agent comprising ammonium nitrate,
at most 16% by weight of said base of one reducing agent, the ratio by weight of said oxidizing agent to said reducing agent being at least 3/1,
at least 25% by weight of said base of one mineral filler,
said composition being **characterized in that** the mineral filler comprises at least:
from 12 to 60% by weight of a regulating agent comprising clay and at least a regulating compound chosen from hydroxides, mineral carbonates and bicarbonates, ammonium carbamates, phosphates and polyphosphates and magnesium chloride hexahydrate,
from 2 to 14% by weight of an aerating agent comprising at least one aerating compound chosen from silica, kieselguhr, talc, silicates, iron oxide, aluminum oxide, magnesium oxide and calcium oxide, aluminum sulfate, magnesium sulfate, calcium sulfate, potassium sulfate, sodium sulfate and barium sulfate, and mixtures of these compounds, hydroxides, mineral carbonates and bicarbonates, and
from 0.5 to 10% by weight of a catalyst agent comprising at least a catalyst compound selected from clay, magnesium chloride hexahydrate, phosphates and polyphosphates, that may or may not be hydrated, halogenated inorganic salts, including ammonium-based salts, inorganic or organic copper salts, and titanium oxide TiO₂ and mixtures thereof.

2. The smoke composition as claimed in claim 1, **characterized in that** said reducing agent comprises at least one first organic compound chosen from carbohydrates and derivatives, polyols, organic acids and the salts of said acids, said acids or salts containing at most 9 carbon atoms, and carbon derivatives, such as charcoal, carbon black or graphite.

3. The smoke composition as claimed in claim 2, **characterized in that** said first organic compound at least is starch, celluloses and derivatives, sorbitol, glycerol or pentaerythritol.

4. The smoke composition as claimed in claim 2, **characterized in that** said first organic compound at least is chosen from organic hydroxycarboxylic acids and their salts, said acids or salts containing up to 7 carbon atoms.

5. The smoke composition as claimed in any one of claims 2 to 4, **characterized in that** the reducing agent comprises one second organic compound that is chosen from urea, dicyandiamide, melamine and cyanamide, and salts thereof, azodicarbonamide, guanidine and its salts, biguanide and its salts, methylcarbazate and ethylcarbazate, said second organic reducing compound being present in a maximum proportion of 12% by weight relative to the weight of the base.

6. The smoke composition as claimed in any one of claims 1 to 5, **characterized in that** said base comprises, relative to the final weight of the base, from 23 to 42% by weight of said regulating agent.

7. The smoke composition as claimed in any one of claims 1 to 6, **characterized in that** said base comprises, relative to the final weight of the base, from 8 to 12% by weight of said aerating agent.

8. The smoke composition as claimed in any one of claims 1 to 7, **characterized in that** said base comprises, relative to the final weight of the base, from 3 to 5% by weight of said catalyst agent.

9. The smoke composition as claimed in any one of claims 1 to 8, **characterized in that** said regulating agent comprises precipitated or vaporized silica.

10. The smoke composition as claimed in any one of claims 1 to 9, **characterized in that** at least one catalyst compound of the catalyst agent is chosen from sodium chloride, sodium iodide, potassium chloride, potassium iodide, calcium chloride, calcium iodide, magnesium chloride, magnesium iodide, ammonium chloride, ammonium iodide, copper chloride, copper iodide, cupric oxide CuO, and titanium oxide TiO₂.

11. The smoke composition as claimed in any one of claims 1 to 10, **characterized in that** the regulating agent is chosen from magnesium hydroxide, aluminum hydroxide, sodium carbonate, potassium carbonate, calcium carbonate and magnesium carbonate, that may or may not crystallize with water.

12. The smoke composition as claimed in any one of claims 1 to 11, **characterized in that** the reducing agent comprises at least one inorganic reducing compound.

13. The smoke composition as claimed in claim 12, **characterized in that** the inorganic reducing compound is chosen from sulfur and sulfur oxides, that may or may not be anhydrous.

14. The smoke composition as claimed in claim 13, **characterized in that** the inorganic reducing compound is anhydrous or nonanhydrous sodium thiosulfate Na₂S₂O₃.

15. The smoke composition as claimed in claim 14, **characterized in that** the sodium thiosulfate is present in a proportion ranging from 1 to 6% by weight relative to the weight of the base.

16. The smoke composition as claimed in any one of claims 1 to 15, **characterized in that** the oxidizing agent is present in said base in a proportion ranging from 30 to 70% by weight.

17. The smoke composition as claimed in claim 16, **characterized in that** the oxidizing agent is present in a proportion ranging from 40 to 60% by weight relative to the weight of the base.

18. The smoke composition as claimed in claim 16 or 17, **characterized in that** the oxidizing agent only consists into ammonium nitrate.

19. The smoke composition as claimed in claim 16 or 17, **characterized in that** the oxidizing agent also comprises from 1 to 9% by weight of said base, of copper nitrate, aluminum nitrate or magnesium nitrate.

20. The smoke composition as claimed in any one of claims 1 to 17 or 19, **characterized in that** the oxidizing agent comprises at least one peroxide chosen from inorganic peroxyhydrated salts.

21. The smoke composition as claimed in any one of claims 1 to 20, **characterized in that** said base comprises from 3 to 15% by weight of starch.

22. The smoke composition as claimed in any one of claims 1 to 21, **characterized in that** it comprises from 6 to 12% by weight of silica.

23. The smoke composition as claimed in any one of claims 1 to 20, **characterized in that** said base comprises from 2 to 7% by weight of a chlorate or of a perchlorate or of an iodate or of a periodate.

24. The smoke composition as claimed in any one of claims 1 to 23, **characterized in that** the active ingredient(s) is (are) chosen from disinfectant or insecticidal ingredients.

## Patentansprüche

1. Rauch erzeugende Zusammensetzung umfassend 0,05 bis 5 % einer oder mehrerer aktiver Materialien und einen Rauch erzeugenden Ausgangsstoff, der mindestens umfasst:
ein Oxidationsmittel, welches Ammoniumnitrat umfasst,
höchstens 16 Gew.% eines Reduktionsmittels, wobei das Gewichtsverhältnis des Oxidationsmittels zum Reduktionsmittel mindestens 3/1 beträgt,
mindestens 25 Gew.% eines mineralischen Füllstoffs,
wobei die Zusammensetzung **dadurch gekennzeichnet ist, dass** der mineralische Füllstoff mindestens umfasst:
12 bis 60 Gew.% eines Regulators, der Ton und mindestens eine regulatorische Verbindung umfasst, die ausgewählt ist aus Hydroxiden, Carbonaten, mineralischen Bicarbonaten und Ammoniumcarbamaten, Phosphaten, Polyphosphaten und Magnesiumchloridhexahydrat,
2 bis 14 Gew.% eines Luftporenbildners, der mindestens eine Luftporen bildende Verbindung umfasst, die ausgewählt ist aus Kieselsäure, Kieselgur, Talkum, Silikaten, Oxiden von Eisen, Aluminium, Magnesium und Calcium, Sulfaten von Aluminium, Magnesium, Calcium, Kalium, Natrium und Barium sowie Gemischen dieser Verbindungen, Hydroxiden, Carbonaten und mineralischen Bicarbonaten und
0,5 bis 10 Gew.% eines Katalysators, der mindestens eine katalytische Verbindung umfasst, die ausgewählt ist aus Ton, Magnesiumchloridhexahydrat, Phosphaten und Polyphosphaten, hydriert oder nicht, halogenierten Mineralsalzen, darin auf Grundlage von Ammonium enthalten, mineralischen oder organischen Kupfersalzen sowie Titanoxid TiO₂ und deren Gemischen.

2. Zusammensetzung nach Anspruch 1, **dadurch gekennzeichnet, dass** das Reduktionsmittel mindestens eine erste organische Verbindung umfasst, die ausgewählt ist aus Kohlenhydraten und Derivaten, Polyolen, organischen Säuren und Salzen dieser Säuren, wobei die Säuren oder Salze höchstens 9 Kohlenstoffatome enthalten, sowie Kohlenstoffderivaten, wie Kohle, Ruß oder Graphit.

3. Rauch erzeugende Zusammensetzung nach Anspruch 2, **dadurch gekennzeichnet, dass** es sich bei der ersten organischen Verbindung mindestens um Stärke, Cellulosen und Derivaten, Sorbitol, Glycerol oder Pentaerythritol handelt.

4. Rauch erzeugende Zusammensetzung nach Anspruch 2, **dadurch gekennzeichnet, dass** die erste organische Verbindung mindestens ausgewählt ist aus organischen Hydroxycarboxylsäuren und deren Salzen, wobei die Säuren oder Salze bis zu 7 Kohlenstoffatome enthalten.

5. Rauch erzeugende Zusammensetzung nach einem der Ansprüche 2 bis 4, **dadurch gekennzeichnet, dass** das Reduktionsmittel eine zweite organische Verbindung umfasst, die ausgewählt ist aus Harnstoff, Dicyandiamid, Melamin, Cyanamid und deren Salzen, Azodicarbonamid, Guanidin und dessen Salzen, Biguanid und dessen Salzen, Methyl- und Ethylcarbazaten, wobei die zweite reduzierende organische Verbindung in einem maximalen Verhältnis von 12 Gew.% bezüglich des Gewichts des Ausgangsstoffs vorliegt.

6. Rauch erzeugende Zusammensetzung nach einem der Ansprüche 1 bis 5, **dadurch gekennzeichnet, dass** der Ausgangsstoff, im Verhältnis zum Endgewicht des Ausgangsstoffs, 23 bis 42 % des Regulators umfasst.

7. Rauch erzeugende Zusammensetzung nach einem der Ansprüche 1 bis 6, **dadurch gekennzeichnet, dass** der Ausgangsstoff, im Verhältnis zum Endgewicht des Ausgangsstoffs, 8 bis 12 % des Luftporenbildners umfasst.

8. Rauch erzeugende Zusammensetzung nach einem der Ansprüche 1 bis 7, **dadurch gekennzeichnet, dass** der Ausgangsstoff, im Verhältnis zum Endgewicht des Ausgangsstoffs, 3 bis 5 % des Katalysators umfasst.

9. Rauch erzeugende Zusammensetzung nach einem der Ansprüche 1 bis 8, **dadurch gekennzeichnet, dass** der Luftporenbildner präzipitierte oder vaporisierte Kieselsäure umfasst.

10. Rauch erzeugende Zusammensetzung nach einem der Ansprüche 1 bis 9, **dadurch gekennzeichnet, dass** mindestens eine katalytische Verbindung des Katalysators ausgewählt ist aus Chloriden und Iodiden von Natrium, Kalium, Calcium, Magnesium, Ammonium und Kupfer, Kupferoxid CuO und Titanoxid TiO₂.

11. Rauch erzeugende Zusammensetzung nach einem der Ansprüche 1 bis 10, **dadurch gekennzeichnet, dass** der Regulator ausgewählt ist aus Magnesium- und Aluminiumhydroxiden und Carbonaten von Natrium, Kalium, Calcium und Magnesium, mit Wasser kristallisierend oder nicht.

12. Rauch erzeugende Zusammensetzung nach einem der Ansprüche 1 bis 11, **dadurch gekennzeichnet, dass** das Reduktionsmittel mindestens eine reduzierende mineralische Verbindung umfasst.

13. Rauch erzeugende Zusammensetzung nach Anspruch 12, **dadurch gekennzeichnet, dass** die reduzierende mineralische Verbindung ausgewählt ist aus Schwefel und Schwefeloxiden, wasserfrei oder nicht.

14. Rauch erzeugende Zusammensetzung nach Anspruch 13, **dadurch gekennzeichnet, dass** es sich bei der reduzierenden mineralischen Verbindung um Natriumthiosulfat Na₂S₂O₃, wasserfrei oder nicht, handelt.

15. Rauch erzeugende Zusammensetzung nach Anspruch 14, **dadurch gekennzeichnet, dass** das Natriumthiosulfat in einem veränderlichen Verhältnis von 1 bis 6 Gew.% bezüglich des Gewichts des Ausgangsstoffs vorliegt.

16. Rauch erzeugende Zusammensetzung nach einem der Ansprüche 1 bis 15, **dadurch gekennzeichnet, dass** das Oxidationsmittel im Ausgangsstoff in einem veränderlichen Verhältnis von 30 bis 70 Gew.% vorliegt.

17. Rauch erzeugende Zusammensetzung nach Anspruch 16, **dadurch gekennzeichnet, dass** das Oxidationsmittel in einem veränderlichen Verhältnis von 40 bis 60 Gew.% bezüglich des Gewichts des Ausgangsstoffs vorliegt.

18. Rauch erzeugende Zusammensetzung nach Anspruch 16 oder 17, **dadurch gekennzeichnet, dass** das Oxidationsmittel nur aus Ammoniumnitrat besteht.

19. Rauch erzeugende Zusammensetzung nach Anspruch 16 oder 17, **dadurch gekennzeichnet, dass** das Oxidationsmittel ferner 1 bis 9 Gew.% des Ausgangsstoffs an Kupfernitrat, Aluminiumnitrat oder Magnesiumnitrat umfasst.

20. Rauch erzeugende Zusammensetzung nach einem der Ansprüche 1 bis 17 oder 19, **dadurch gekennzeichnet, dass** das Oxidationsmittel mindestens ein Peroxid umfasst, das ausgewählt ist aus peroxihydrierten Mineralsalzen.

21. Rauch erzeugende Zusammensetzung nach einem der Ansprüche 1 bis 20, **dadurch gekennzeichnet, dass** der Ausgangsstoff 3 bis 15 Gew.% Stärke umfasst.

22. Rauch erzeugende Zusammensetzung nach einem der Ansprüche 1 bis 21, **dadurch gekennzeichnet, dass** der Ausgangsstoff 6 bis 12 Gew.% Kieselsäure umfasst.

23. Rauch erzeugende Zusammensetzung nach einem der Ansprüche 1 bis 20, **dadurch gekennzeichnet, dass** der Ausgangsstoff 2 bis 7 Gew.% eines Chlorats oder eines Perchlorats oder eines Iodats oder eines Periodats umfasst.

24. Rauch erzeugende Zusammensetzung nach einem der Ansprüche 1 bis 23, **dadurch gekennzeichnet, dass** das aktive Material ausgewählt ist oder die aktiven Materialien ausgewählt sind aus desinfizierenden oder insektiziden aktiven Materialien.
